# EUROPEAN PATENT SPECIFICATION

(11) **EP 2 128 238 B1**
(45) Date of publication and mention of the grant of the patent: **04.08.2010**
(21) Application number: 09160559.2
(22) Date of filing: 19.05.2009
(51) Int. Cl.: C12G 3/00, C12H 1/00

(54) **Method for Aging Alcoholic Liquids**
Verfahren zur Alterung von alkoholischen Flüssigkeiten
Procédé de vieillissement de liquides alcoolisés

(30) Priority: 22.05.2008 TW 97118978
(43) Date of publication of application: 02.12.2009
(73) Proprietor: Green Health Biotechnology Co., Ltd., Dungshr Shiang Yunlin (TW)
(72) Inventor: Wei, Jaw Yi, Yunlin (TW); Wu, Yu Chien, Yunlin (TW); Lee, Sarina, Yunlin (TW); Lin, Shengfu, Taipei (TW)
(74) Representative: Grünecker, Kinkeldey, Stockmair & Schwanhäusser Anwaltssozietät

(56) References cited:
- EP-A- 1 026 234
- US-A- 3 843 809
- US-A- 5 034 238

## Description

### FIELD OF THE INVENTION

The present invention relates to an apparatus and a method for aging alcoholic liquids, and more particularly to an apparatus and a method for aging alcoholic liquids using the supercritical technology.

### DESCRIPTION OF PRIOR ART

Traditionally, the aging of alcoholic liquids is most commonly achieved by the method of storage, in which alcoholic liquids may be stored in microporous casks or oak barrels and allowed to age naturally, thereby enhancing the aroma and the taste of the alcoholic liquids. In addition, the components in the alcoholic liquids that contribute to hangover and headaches, such as alcoholic impurities, ketone impurities, aldehyde impurities, and furan aldehydes; can be removed as a result. Though the method of aging alcoholic liquids by storage is natural, it has a major drawback of requiring long periods of time to allow the alcoholic liquids to age.

Therefore, a number of other methods are commonly used to accelerate the aging of alcoholic liquids, which includes:
(1) Via increasing the rate of oxygen infusion, which had been disclosed in the patent US 6,966,250, the aging of alcoholic liquids is accelerated in the means of increasing the rate of oxygen infusion by approximately 50%. However, the acceleration in the aging of alcoholic liquids is limited (from multifold to more than tenfold), or the alcoholic liquids may become acidified.
(2) Via accelerating the esterification process by heating, as had been disclosed in the patents US 6,869,630 and US 6,703,060, by increasing the temperature to approximately 200°C, the esterification process is accelerated by 30-40 times.
(3) Accelerating the esterification process by using oak barrels of various sizes and shapes that have continuous internal air passages, as had been disclosed in the patents US 3,942,423, US 5,537,913 and US 6,378,419.
(4) Accelerating the aging of alcoholic liquids by using low frequency (20-400 Hz) and strong magnetic fields (10-120 Gauss), which had been described in the patent US 5,860,353.
(5) Accelerating the aging of alcoholic liquids by using low frequency (20-400 Hz) and strong magnetic fields (10-120 Gauss), which had been disclosed in the patents US 4,210,676 and Taiwan Utility Model Patent No. M241431.
(6) Via using catalysts like nano-size gold, silver, and platinum particles to accelerate the aging of alcoholic liquids, soy sauce, or vinegar, as had been described in the patent Taiwan Utility Model Patent No. M269964.
(7) Via using bisulfite esterification catalysts like alkali metal bisulfites and metabisulfites to accelerate the reaction of organic acids selected from the group consisting of citric malic and tartaric acids, and mixtures thereof, with ethanol to obtain esterification between the acid and ethanol, as had been disclosed in US Patent 3,843,809.

According to the patent US 6,869,630, the traditional method of aging alcoholic liquids requires 36-48 months for the esterification process to run its course, but it would take only 30-40 days by using the method disclosed in the patent (which accelerate the esterification process by approximately 36 times: please refer to the 56th to the 67th lines of the first column in the patent). On the other hand, using the method disclosed in the patent US5860353 to age alcoholic liquids for several days to several weeks would produced the same quality of alcoholic liquids aged for one year with regard to taste, color, and aroma thereof (which accelerates the esterification process by more than tenfold; please refer to the 28th to the 30th lines of the fifth column in the patent). Overall, the aforesaid methods generally accelerate aging of alcoholic liquids by several times to more than tenfold.

### SUMMARY OF THE INVENTION

The preset invention utilizes the technique of esterification under supercritical conditions, which significantly accelerates aging of alcoholic liquids, and this means 36-48 months of esterification process could be achieved within minutes by using the method of the present invention, which would require at least 30-40 days using the method of US 6,869,630 (please refer to the 56th to the 67th lines of the first column in the patent).

The present invention provides a method for allowing esterification process to run its course under supercritical conditions, which not only enhances the taste of alcoholic liquids due to accumulation of esters therein, but also reduces or removes alcoholic impurities, ketone impurities, aldehyde impurities, and furan aldehydes that contribute to hangover and headaches. As a results, the disclosure effectively enhances the quality of alcoholic liquids and reduces the time for aging alcoholic liquids.

It is the object of the present invention to provide a method for accelerating the aging of alcoholic liquids.

It is another object of the present invention to provide an apparatus for aging alcoholic liquids in the presence of esterification catalysts under supercritical conditions.

The first object is achieved by the method of claim 1, in which the alcoholic liquid is esterified in the presence of an esterification catalyst, characterized in that said alcoholic liquid is esterified in supercritical carbon dioxide so as to reduce the time required for aging the alcoholic liquid.

The second object is achieved by an apparatus for supercritical aging, comprising:
a supercritical trough including a trough body, a material supply device, and a supercritical fluid supply device; wherein said material supply device supplies a material to said trough body, and said supercritical fluid supply device supplies a supercritical fluid to said trough body, while said trough body holds the material and the supercritical fluid that have been supplied thereto, and allows the material and the supercritical fluid to form an evenly-distributed solution; and
a catalyst trough including a trough body and a product drain device: wherein said trough body holds a catalyst therein, and said product drain device is for draining a product away from said trough body of said catalyst through: said catalyst trough and said supercritical trough arc connected so as to allow said evenly-distributed solution to come into contact with said catalyst and undergo catalytic reaction.

The aforesaid apparatus for supercritical aging may be a batch type production apparatus or a continuous type production apparatus, and is preferably a continuous type production apparatus. When said apparatus for supercritical aging is a continuous type production apparatus, said material supply device may be of any previously known continuous type material supply devices, such as a pump, for example. When said apparatus for supercritical aging is a batch type production apparatus, said material supply device may be of any previously known continuous type material supply devices, like a pump, for instance, or of simple openings and seal-off devices (openings are firstly opened, the material is poured in, and then seal-off devices are sealed). Said supercritical fluid supply device may be of any previously known supercritical fluid supply device, like a pump, for instance, and is preferably further comprised of control valves for controlling pressure and flow rate thereof.

Said supercritical fluid is preferably supercritical carbon dioxide.

Said supercritical trough is preferably filled with packing, and said packing may be any packing that increases the number of theoretical plates, such as distillation packing, one example, of which is Pro-Pak® (a distillation packing produced by CANNON Instrument Company), which effectively speeds up reaction rates and allows a supercritical trough required for reactions to be smaller in size relatively.

Said supercritical trough is not limited in size in any ways, and a larger supercritical trough allows for greater productivity, whereas a smaller supercritical trough allows for less productivity. The flow rate of supercritical carbon dioxide to the supercritical trough is decided by the size of the supercritical trough.

Moreover, pressure in the supercritical trough is an essential factor in allowing carbon dioxide to remain as a supercritical fluid, and the intensity of pressure varies for different types of aging reactions. Using the aging of alcoholic liquids as an example, the pressure within the supercritical trough is preferably maintained at 69-345 bar (1000-5000 psi), more preferably at 138-276 bar (2000-4000 psi), and most preferably at 172-207 bar (2500-3000 psi).

In addition, the temperature in the supercritical trough is another vital factor in allowing carbon dioxide to remain as a supercritical fluid, and the level of temperature varies for different types of aging reactions. Using the aging of alcoholic liquids as an example, the temperature is preferably 30-100°C; is more preferably 40-90°C. and is most preferably 45-65°C. When the supercritical trough is larger in size, a temperature control device is preferably further included for maintaining the temperature of said supercritical trough. Said temperature control device may be any previously known temperature control devices, such as controllable heating coils, or hot-water circulation devices, for instance.

Said supercritical trough is not limited in size in any ways, and a larger supercritical trough allows for greater productivity, whereas a smaller supercritical trough allows for less productivity.

The catalyst in the catalyst trough also varies according to different types of aging reactions. In the case of esterification process, said catalysts may be any previously known esterification catalysts, such as lipase, for example Novozym 435 (purchased from the Danish Novozymes company). Said catalyst is not limited in the amount of usage in any ways; the more catalyst is used, the more efficient the aging reaction is, whereas the less catalysts is used, the less efficient the aging reaction is.

The usage of said apparatus for supercritical aging is determined by the types of aging reaction. In the case of aging of alcoholic liquids, the reaction conditions are described in the following method for aging alcoholic liquids.

The aforesaid apparatus for supercritical aging can be used to accelerate aging of alcoholic liquids, but anyone skilled in the manufacturing of foods and drugs could also use apparatuses identical or similar thereof to carry out aging of any foods or drugs: the aging of edible vinegar is one of the examples.

A method for aging alcoholic liquids has also been included in this disclosure, in which an esterification catalyst is utilized to esterify the alcoholic liquids, characterized in that: said esterification reaction of alcoholic liquids is carried out in supercritical carbon dioxide, so as to significantly reduce the time required for aging alcoholic liquids.

In order to allow said supercritical carbon dioxide to be effective for said esterification reaction, carbon dioxide is firstly allowed to form a supercritical fluid in the supercritical trough under 69-345 bar (1000-5000 psi) and at 30-100°C, and then the supercritical carbon dioxide brings alcoholic liquids into said catalyst trough to undergo esterification.

Said supercritical trough is preferably filled with packing, and said packing may be any packing that increases the number of theoretical plates, such as distillation packing. For instance, the distillation packing Pro-Pak®, which effectively speeds up the reaction rate, allows a supercritical trough required for reaction to be smaller in size.

Said supercritical trough is not limited in size in any ways, and a larger supercritical trough allows for greater productivity, whereas a smaller supercritical trough allows for less productivity. The flow rate of carbon dioxide in the supercritical trough is determined by the size of the supercritical trough, but the pressure in the supercritical trough is preferably maintained at 69-345 bar (1000-5000 psi); more preferably at 138-276 bar (2000-4000 psi), and most preferably at 172-207 bar (2500-3000) psi.

The temperature in said supercritical trough is preferably 30-100°C; is more preferably 40-90°C. and is most preferably 45-65°C.

Said esterification process may be a batch type reaction or a continuous type reaction, and is preferably a continuous type reaction. In a continuous type reaction, the flow rate of alcoholic liquids to the supercritical trough is not limited in any ways; the greater the flow rate, the less effective the aging process is, while the less the flow rate, the more effective the aging process is.

The pressure in said catalyst trough is preferably maintained at 69-345 bar (1000-5000 psi); more preferably at 138-276 bar (2000-4000 psi), and most preferably at 172-207 bar (2500-3000 psi). It is generally more preferable to have the pressure in the catalyst trough identical to or slightly smaller than the pressure in the supercritical trough.

The catalyst in said catalyst trough may be any previously known esterification catalyst, such as a lipase. Said catalyst is not limited in the amount of usage in any ways; the more catalyst is used, the more efficient the aging reaction is, whereas the less catalyst is used, the less efficient the aging reaction is.

The temperature in said catalyst trough is preferably 30-100°C; more preferably 40-90°C, and most preferably 45-65°C. It is generally more preferable to have the temperature in the catalyst trough identical to the temperature in the supercritical trough.

Generally, the productivity is higher when using larger supercritical troughs and catalyst troughs, and smaller when using smaller supercritical troughs and catalyst troughs. Supercritical esterification is more effective by using a smaller flow rate of alcoholic liquids and a larger volume of catalysts, and vice versa.

### BRIEF DESCRIPTION OF DRAWINGS

Fig. 1a is a GC/MS spectrum for the commercial Kinman Sorghum Wine.
Fig. 1b is a GC/MS spectrum for the Kinman Sorghum Wine from Control Example 3.
Fig. 1c is a GC/MS spectrum for the Kinman Sorghum Wine that had been stored for twenty years.
Fig. 1d is a GC/MS spectrum for the Kinman Sorghum Wine that had been stored for fifty years.
Fig. 1e is a GC/MS spectrum for the Kinman Sorghum Wine produced in Example 1.
Fig. 2a is a GC/MS spectrum for the commercial Wuliangye Wine.
Figs. 2b and 2c are GC/MS spectra for the Wuliangye Wine produced in Examples 2 and 3. respectively.
Figs. 3a, 3b, 3c, 3d, and 3e are GC/MS spectra for the Suntory Whisky produced in Examples 4, 5, 6, 7, and 8, respectively.
Fig. 4 is a schematic block diagram that shows an apparatus for supercritical aging according to the present invention.
Fig. 5 is a schematic view that shows an apparatus for supercritical aging according to a preferred embodiment of the present invention.

### DETAILED DESCRIPTION OF PREFERRED EMBODIMENTS

The apparatus and method of the present invention can be best understood by referring to the following preferred embodiments and Examples (with Control Examples) of the invention.

### A Preferred Embodiment:

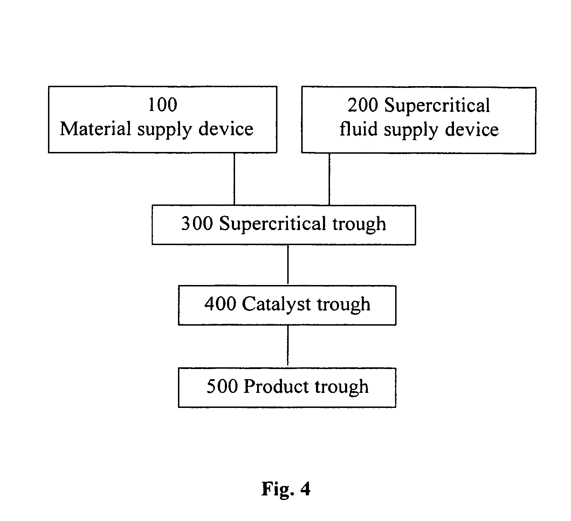

Fig. 4 is a schematic block diagram that shows an apparatus for supercritical aging according to one of the preferred embodiments of the present invention, including a material supply device 100, a supercritical fluid supply device 200, a supercritical trough 300, a catalyst trough 400, and a product trough 500. Moreover, a connector indicated as a line linking between components in the diagram) is provided to connect the material supply device 100 and the supercritical trough 300; another connector (indicated as a line linking between components in the diagram) is provided to connect the supercritical fluid supply device 200 and the supercritical trough 300, and yet another connector (indicated as a line linking between components in the diagram) is provided to connect the supercritical trough 300 and the catalyst trough 400, while still another connector (indicated as a line linking between components in the diagram) is provided to connect the catalyst trough 400 and the product trough 500.

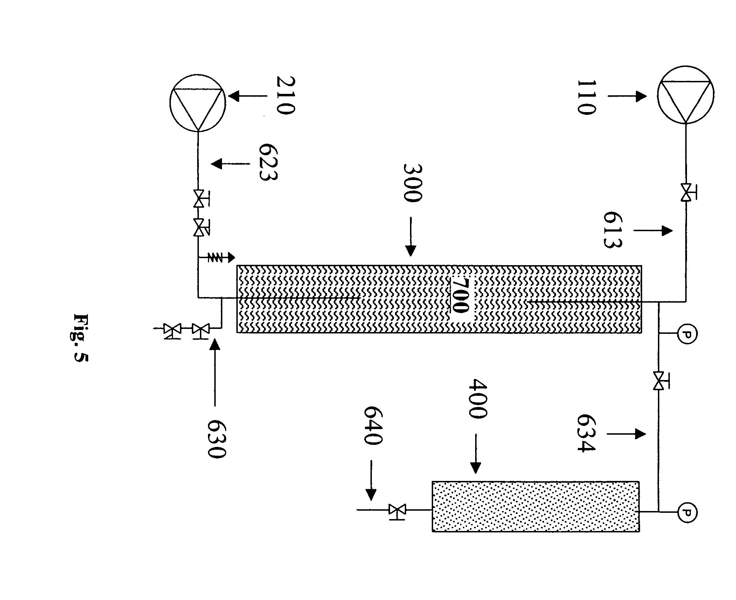

Fig. 5 is a schematic view that shows an apparatus for supercritical aging constructed according to the preferred embodiment of the present invention. The material supply device 100 in Fig. 4 comprises a pump 110 in Fig. 5, which serves as a device for introducing a material into the supercritical trough 300 via a pipeline 613. On the other hand, the supercritical fluid supply device 200 in Fig. 4 comprises a pump 210 in Fig. 5. which serves as a device for introducing a supercritical fluid into the supercritical trough 300 via a pipeline 623. In addition, a pipeline 634 is also connected between the supercritical trough 300 and the catalyst trough 400, so as to allow the supercritical fluid to bring the material from the supercritical trough 300 into the catalyst trough 400 to undergo esterification. The catalyst trough 400 also has another pipeline 640 for draining a product out of the catalyst trough 400 into the product trough 500 (shown in Fig. 4); the supercritical trough 300 is filled with packing 700, and the catalyst trough 400 also includes lipase that has not been given any component number. The pipeline 623 is further connected with an emitting pipeline 630 for emitting a part or all of the supercritical fluid when necessary. The pipelines 613, 623, 630, 634, and 640 are also provided with valves (indicated in the diagram but not given component numbers) for controlling flows of fluids. Furthermore, the pipeline 634 is also provided with pressure gauges (indicated in the diagram but not given component numbers) for displaying and controlling pressure levels at the supercritical trough 300 and the catalyst trough 400. The supercritical trough 300 and the catalyst trough 400 also include a temperature control device, respectively (not indicated in the diagram), so as to control temperature at the supercritical trough 300 and the catalyst trough 400.

### Control Examples 1-3:

Respectively, 500 ml of 58° Kinman Sorghum Wine sold commercially in Taiwan was poured into different 1000 ml wine bottles, and then added 3 g, 5 g, and 10 g of an enzyme into each bottle. The bottles were sealed for 6 months, and were then opened for testing. The enzyme was Novozym 435.

Wine samples that had been subjected to esterification were compared to those that had not in regard to taste, color, and aroma thereof. It was found that there were no significant differences between the two.

### Example 1

The apparatus shown in Fig. 5 was used in this example, in which portions of the 58° Kinman Sorghum Wine sold commercially in Taiwan were aged. The supercritical trough had a volume of 37 liters and was filled with 18 kg of Pro-Pak®; 1 kg of a catalyst was used in the catalyst trough, and the catalyst used was Novozym 435. As for the reaction conditions, supercritical carbon dioxide in the troughs was maintained at 172 bar (2500 psi) and 50°C, and a flow rate of the Sorghum Wine was set at 50 L/hr.

Subsequently, comparisons were made between the esterified wine, the non-esterified 58° Kinman Sorghum Wine, the Kinman Sorghum Wine that had been stored for 20 years, and the Kinman Sorghum Wine that had been stored for 50 years sold in Taiwan in regard to taste, color, and aroma thereof. The results are shown in Table 1, which indicates that wine samples produced in Example I are significantly better than the 20-year and the 50-year Kinman Sorghum Wine with regard to their taste, color, and aroma.

**Table 1: Comparison of taste, color, and aroma between Kinman Sorghum Wine and wine produced in Example 1.**

| | Taste | Color | Aroma |
|---|---|---|---|
| 58° Kinman Sorghum Wine | Sharp | Transparent and colorless | Pungent |
| 20-year Kinman Sorghum Wine | Slightly sharp | Slightly golden | Slightly pungent |
| 50-year Kinman Sorghum Wine | Mildly sharp | Lightly golden | Mildly pungent |
| Wine produced in Example 1 | Smooth | Golden | Aromatic |

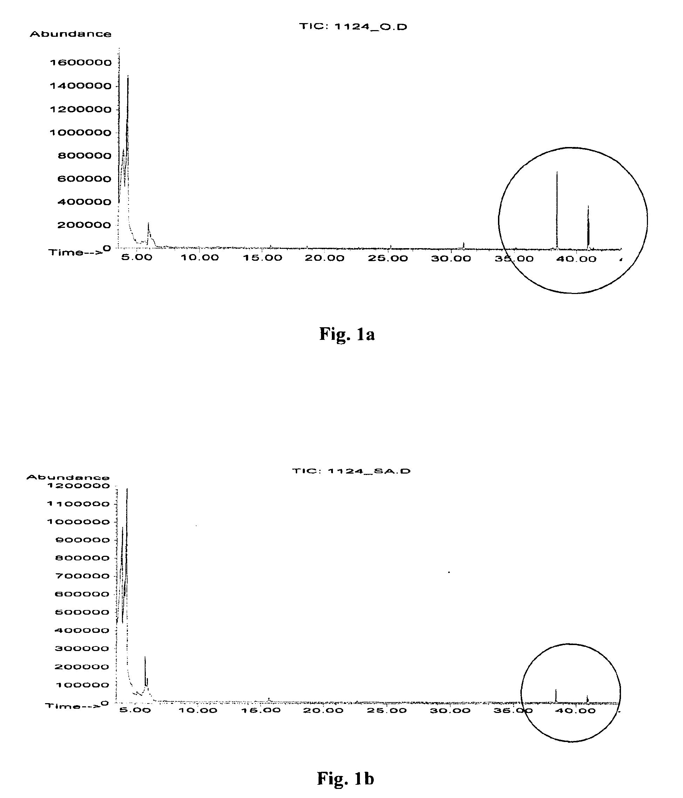

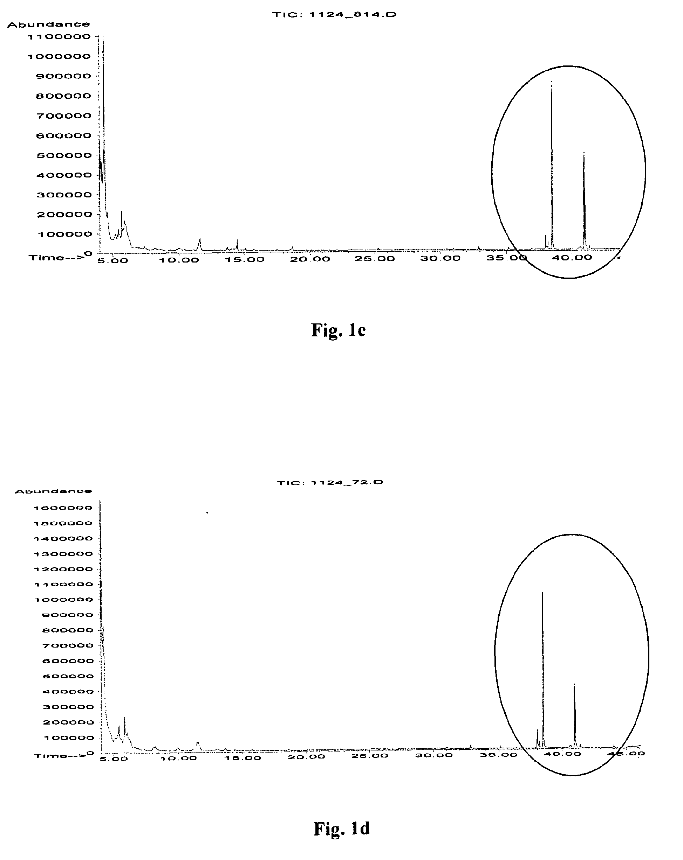

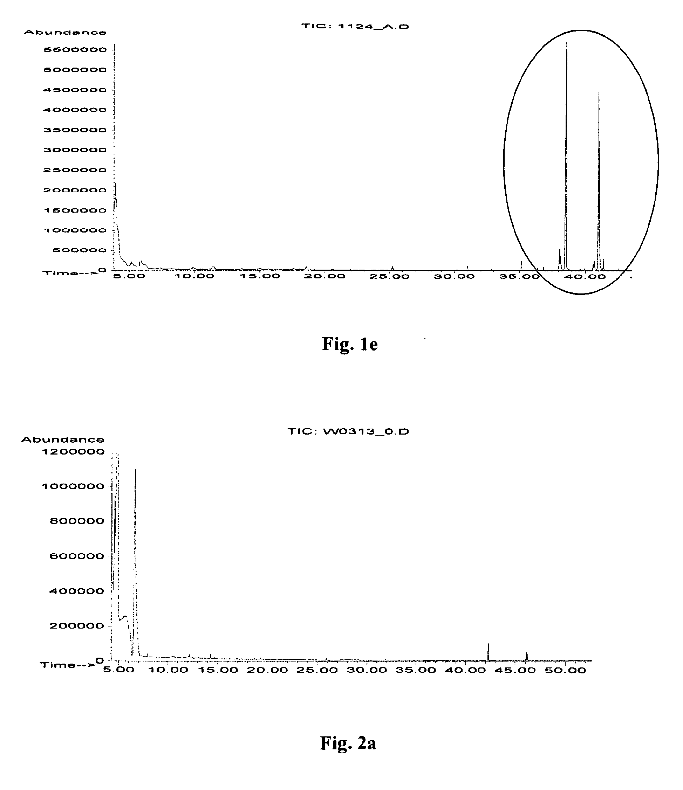

In the next step, GC/MS (Gas Chromatograph/Mass Spectroscopy) analyses were carried out for the commercial 58° Kinman Sorghum Wine, wine produced in Control Example 3, 20-year and 50-year Kinman Sorghum Wines, and wine produced in Example 1; with the flowing rate of the GC/MS analyzer set at 1 ml/min, initial temperature of 40°C, temperature rising rate of 5°C/min, and the temperature was fixed once 260°C was reached. The resultant spectra are shown in Figs. 1a, 1b, 1c, 1d, and 1e; wherein the peaks shown at the left hand side in the circles indicate the presence of ethyl hexadecanoate, which has an abundance of approximately 700K (equivalent to 700000), 100K, 900K, 1050K. and greater than 5500K, respectively in Figs. 1a to 1e, whereas the peaks shown at the right hand side in the circles of the spectra indicate the presence of ethyl linoleate, which has an abundance of approximately 400K, 50K, 500K, 500K, and 4500K, respectively in Figs. 1a to 1e. The results indicated that esterification under supercritical conditions of the present invention increases ester concentration in the wine, which makes the wine more aromatic.

### Examples 2-3

The apparatus shown in Fig. 5 was used in this example, in which portions of the Wuliangye Wine produced in China were aged. The supercritical trough had a volume of 10 liters and was filled with 5 kg of Pro-Pak®; 200 g of a catalyst was used in the catalyst trough, and the catalyst used was Novozym 435. As for the reaction conditions, supercritical carbon dioxide in the troughs was maintained at 172 bar (2500 psi) and 50°C, and flow rates of the Wuliangye Wine were set at 3 L/hr and 1.5 L/hr for Examples 2 and 3, respectively.

Table 2 shows the comparisons of taste, color, and aroma between wine samples that had undergone esterification and that had not. It was discovered that the taste, color, and aroma of the wine produced in Examples 2 and 3 were clearly better than that of the unesterified wine.

**Table 2: Comparison of taste, color, and aroma between Wuliangye Wine and the wine produced in Examples 2 and 3.**

| | Taste | Color | Aroma |
|---|---|---|---|
| Commercial Wuliangye Wine | Sharp | Transparent and colorless | Pungent |
| Wine produced in Example 2 | Smooth | Golden | Aromatic |
| Wine produced in Example 3 | Smooth | Golden | Aromatic |

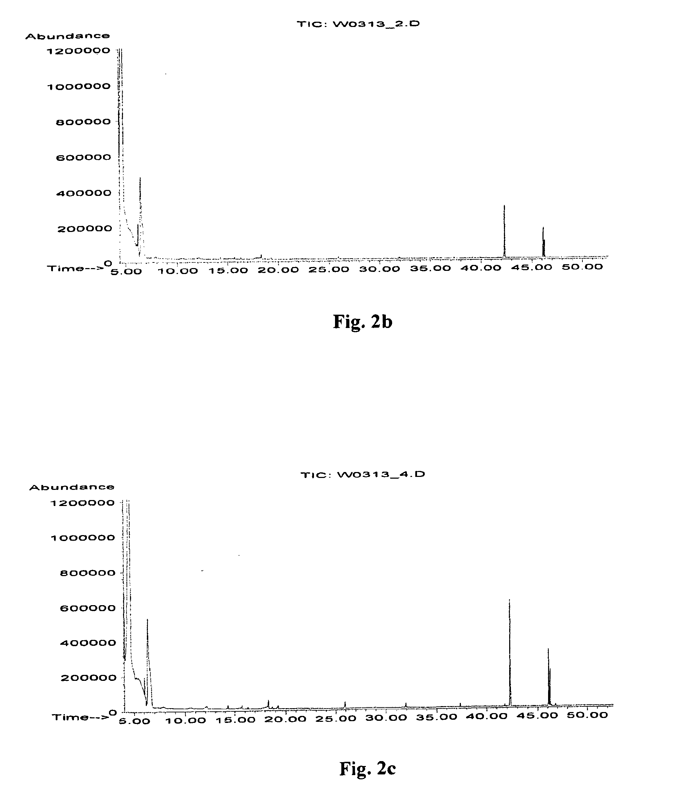

Subsequently, GC/MS analyses were also carried out for the unesterified wine and the wine produced in Examples 2 and 3; with the flow rate of the GC/MS analyzer set at 1 ml/min. initial temperature of 40°C, temperature rising rate of 5°C/min. and the temperature was fixed once 260°C was reached. The resultant spectra arc displayed in Figs. 2a, 2b, and 2c; wherein the abundance of ethyl hexadecanoate is approximately 100K, 300K, and 550K, respectively; whereas the abundance of ethyl linoleate is approximately 50K, 200K, and 400K, respectively. The results demonstrate that esterification under supercritical conditions raises ester concentration in alcohols, which in turn makes the alcohols more aromatic.

### Examples 4-8

Portions of commercial Suntory Whisky were put into the supercritical trough shown in Fig. 5 to undergo reactions, wherein the supercritical trough had a volume of 10 liters and was filled with 5 kg of Pro-Pak®; 200 g of catalysts were used in the catalyst trough, and the catalysts used was Novozym 435. As for the reaction conditions, supercritical carbon dioxide in the troughs was maintained at 172 bar (2500 psi) and 50°C, and flow rates of the Suntory Whisky in Examples 4, 5, 6, 7 and 8 were set at 3.0L/hr, 2.5 L/hr, 2.0 L/hr, 1.5 L/hr, and 1.0 L/hr.

Table 3 shows the comparison of taste, color, and aroma between wine samples that had undergone esterification and that had not. It was found that the taste, color, and aroma of the wine produced in Examples 4-8 were clearly better than that of the unesterified wine.

**Table 3: Comparison of taste, color, and aroma between Suntory Whisky and wine produced in Examples 4-8.**

| | Taste | Color | Aroma |
|---|---|---|---|
| Suntory Whisky | Sharp | Brownish yellow | Pungent and dense |
| Wine produced in Example 4 | Smooth | Light brown | Light fruity aroma |
| Wine produced in Example 5 | Smooth | Light brown | Light fruity aroma |
| Wine produced in Example 6 | Smooth | Light brown | Light fruity aroma |
| Wine produced in Example 7 | Smooth | Light brown | Light fruity aroma |
| Wine produced in Example 8 | Smooth | Light brown | Light fruity aroma |

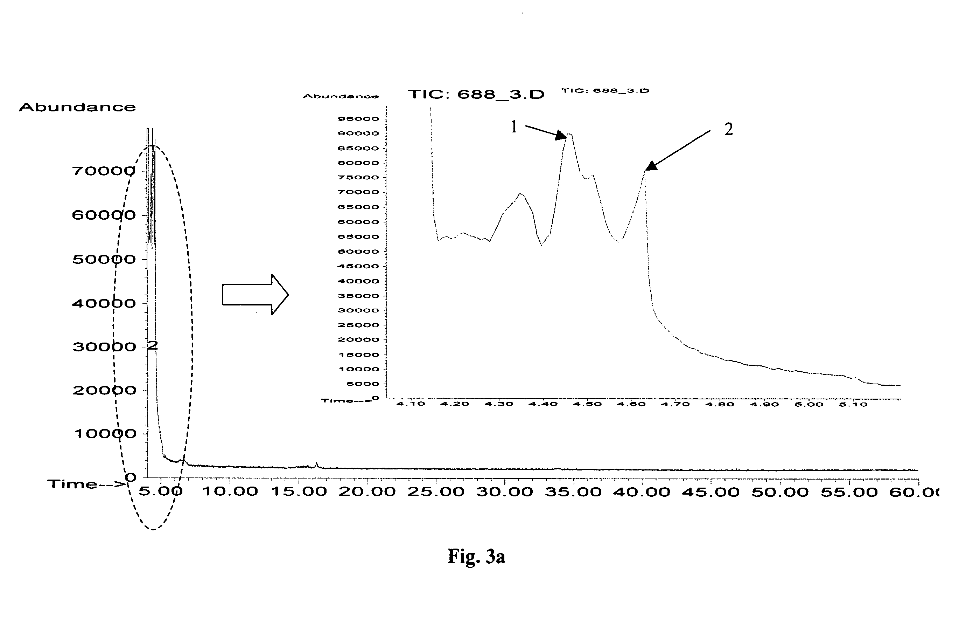

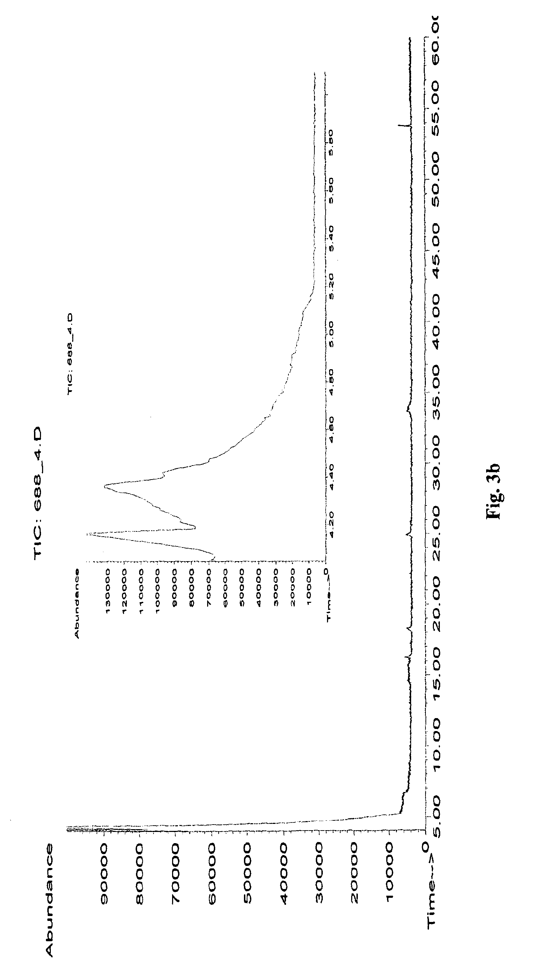

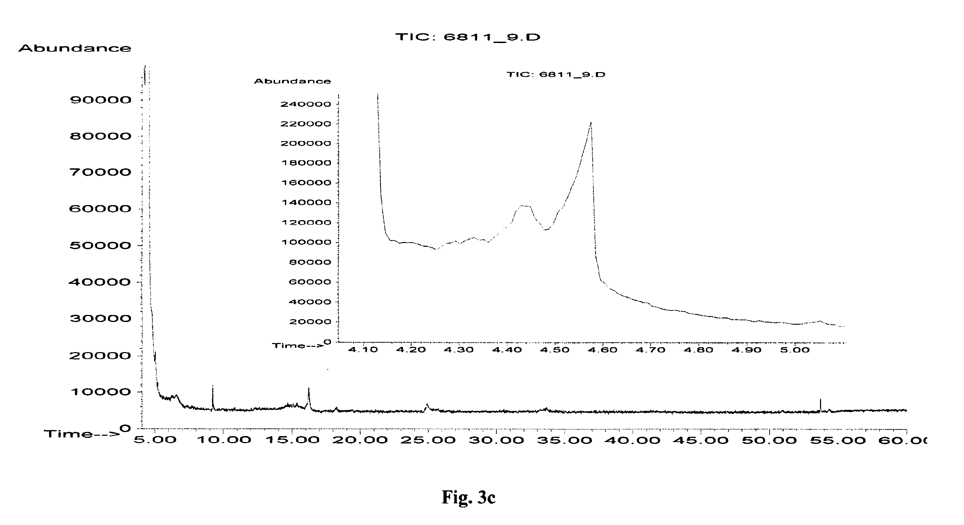

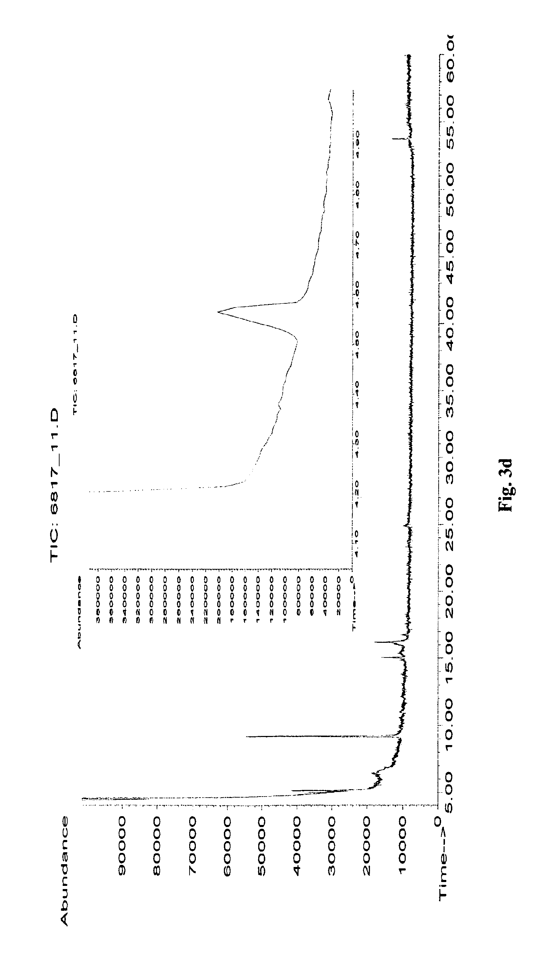

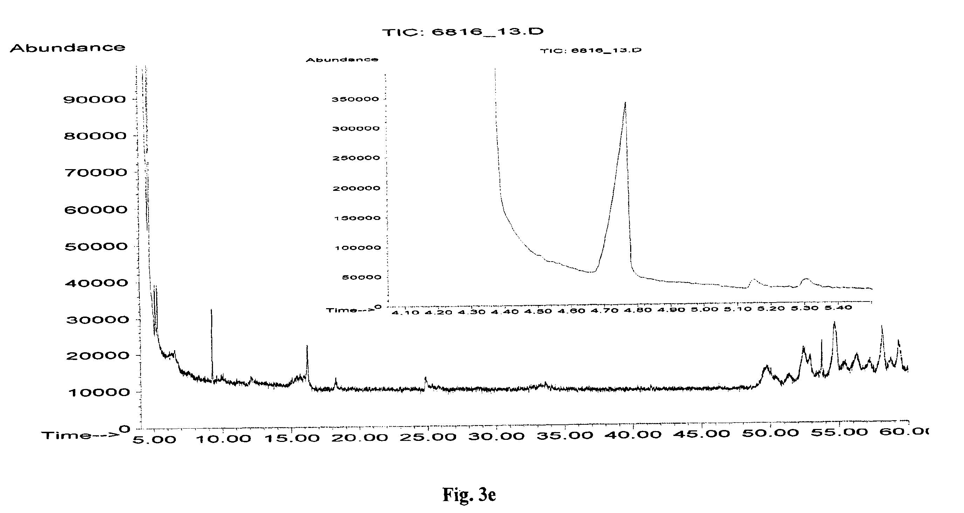

Again, GC/MS analyses were carried out for the wine produced in Examples 4-8; with the flow rate of the GC/MS analyzer set at 1 ml/min, initial temperature of 40°C, temperature rising rate of 5°C/min, and the temperature was fixed once 260°C was reached. The resultant spectra are shown in Figs. 3a, 3b, 3c, 3d, and 3e. In each of the spectra, a peak representing acetic acid (Peak 2) and a peak representing impurities mainly of 3-methyl 1-butanol (Peak 1) have been enlarged and displayed at the center of each spectrum. The results indicate that esterification under supercritical conditions effectively reduces the concentration of impurities in alcohols, thus reducing the sharp taste and pungent smell of the alcohols.

### Examples 9-24

Kinman Sorghum Wine sold in Taiwan was subjected to esterification under supercritical conditions by using the equipment described in Example 2 (please refer to Table 4 for the amount of catalyst used) and the reaction conditions listed in Table 4, and the taste, color, and aroma of the esterified wines were compared and shown in Table 4.

**Table 4: The reaction conditions and results of Examples 9-24.**

| Ex. | Pressure | | Temp. | Catalyst | Flow | Taste | Color | Aroma |
|---|---|---|---|---|---|---|---|---|
| | (bar) | (psi) | (°C) | amount | rate | | | |
| | | | | (g) | (L/hr) | | | |
| 9 | 138 | 2000 | 65 | 200 | 1.5 | Smooth | Golden | Aromatic |
| 10 | 172 | 2500 | 65 | 200 | 1.5 | Smooth | Golden | Aromatic |
| 11 | 207 | 3000 | 65 | 200 | 1.5 | Smooth | Golden | Aromatic |
| 12 | 242 | 3500 | 65 | 200 | 1.5 | Smooth | Golden | Aromatic |
| 13 | 276 | 4000 | 65 | 200 | 1.5 | Smooth | Golden | Aromatic |
| 14 | 207 | 3000 | 40 | 200 | 2.5 | Smooth | Light gold | Aromatic |
| 15 | 207 | 3000 | 50 | 200 | 2.5 | Smooth | Light gold | Aromatic |
| 16 | 207 | 3000 | 60 | 200 | 2.5 | Smooth | Light gold | Aromatic |
| 17 | 207 | 3000 | 70 | 200 | 2.5 | Smooth | Golden | Aromatic |
| 18 | 207 | 3000 | 80 | 200 | 2.5 | Smooth | Golden | Aromatic |
| 19 | 207 | 3000 | 90 | 200 | 2.5 | Smooth | Golden | Aromatic |
| 20 | 193 | 2800 | 45 | 100 | 1.0 | Smooth | Golden | Aromatic |
| 21 | 193 | 2800 | 45 | 150 | 1.5 | Smooth | Golden | Aromatic |
| 22 | 193 | 2800 | 45 | 200 | 2.0 | Smooth | Light gold | Aromatic |
| 23 | 193 | 2800 | 45 | 250 | 2.5 | Smooth | Light gold | Aromatic |
| 24 | 193 | 2800 | 45 | 300 | 3.0 | Smooth | Slightly golden | Aromatic |

## Claims

1. A method for aging an alcoholic liquid, in which the alcoholic liquid is esterified in the presence of an esterification catalyst, **characterized in that** said alcoholic liquid is esterified in supercritical carbon dioxide so as to reduce the time required for aging the alcoholic liquid.

2. The method of claim 1, wherein said supercritical carbon dioxide is firstly allowed to form a supercritical fluid in a supercritical trough at 69-345 bar (1000-5000 psi) and 30-100°C, and then said supercritical carbon dioxide carries said alcoholic liquid into a catalyst trough containing said esterification catalyst.

3. The method of claim 2, wherein the pressure in said catalyst trough and said supercritical trough are identical, and the temperature in said catalyst trough and said supercritical trough are also identical.

4. The method of claim 2, wherein said supercritical trough is filled with distillation packing, and said esterification catalyst in said catalyst trough is a lipase.

5. The method of claim 4, wherein said pressure is 138-276 bar (2000-4000 psi), preferably 172-207 bar (2500-3000 psi).

6. The method of claim 4, wherein said temperature is 40-90°C, preferably 45-65°C.

7. The method of claim 2, which is carried out in a continuous type process.

8. An apparatus for supercritical aging, comprising:
a supercritical trough including a trough body, a material supply device, and a supercritical fluid supply device, wherein said material supply device supplies a material to said trough body, and said supercritical fluid supply device supplies a supercritical fluid to said trough body, while said trough body holds the material and the supercritical fluid that have been supplied thereto, and allows the material and the supercritical fluid to form an evenly-distributed solution; and
a catalyst trough including a trough body and a product drain device; wherein said trough body holds a catalyst therein, and said product drain device is for draining a product away from said trough body of said catalyst trough; said catalyst trough and said supercritical trough are connected so as to allow said evenly-distributed solution to come into contact with said catalyst and undergo catalytic reactions.

9. The apparatus of claim 8, wherein said supercritical fluid is supercritical carbon dioxide.

10. The apparatus of claim 8, wherein said supercritical fluid supply device further comprises a control valve for controlling the pressure and the flow rate of said supercritical fluid.

11. The apparatus of claim 8, wherein said supercritical trough is further filled with distillation packing therein.

12. The apparatus of claim 8 further comprising a temperature control device for controlling the temperature in said supercritical trough.

## Patentansprüche

1. Verfahren zur Reifung von alkoholischen Flüssigkeiten, bei dem die alkoholische Flüssigkeit in Gegenwart eines Veresterungskatalysators verestert wird, **dadurch gekennzeichnet, dass** die genannte alkoholische Flüssigkeit in Gegenwart von überkritischem Kohlenstoffdioxid verestert wird, um die Zeit, die für die Reifung der alkoholischen Flüssigkeiten benötigt wird, zu reduzieren.

2. Verfahren nach Anspruch 1, wobei das genannte überkritische Kohlenstoffdioxid zuerst in einem überkritischen Gefäß mit 69 bis 345 bar (1000 bis 5000 psi) und bei 30 bis 100 °C in ein überkritisches Fluid umgewandelt wird, und dann das überkritische Kohlenstoffdioxid die alkoholischen Flüssigkeit in das Katalysatorgefäß überführt, das den besagten Veresterungskatalysator enthält.

3. Verfahren nach Anspruch 2, wobei der Druck in dem besagten Katalysatorgefäß und dem besagten überkritischen Gefäß identisch sind, und die Temperatur in dem besagten Katalysatorgefäß und dem besagten überkritischen Gefäß auch identisch sind.

4. Verfahren nach Anspruch 2, wobei das besagte überkritische Gefäß mit einem Destillationspackungsmaterial befüllt ist, und der besagte Veresterungskatalysator in dem besagten Katalysatorgefäß eine Lipase ist.

5. Verfahren nach Anspruch 4, wobei der Druck 138 bis 276 bar (2000 bis 4000 psi), noch bevorzugter 172 bis 207 bar (2500 bis 3000 psi) beträgt.

6. Verfahren nach Anspruch 4, wobei die Temperatur 40 bis 90 °C, noch bevorzugter 45 bis 65 °C beträgt.

7. Verfahren nach Anspruch 2, was in einem kontinuierlichen Prozess durchgeführt wird.

8. Vorrichtung für die überkritische Reifung die umfasst:
ein überkritisches Gefäß, das einen Gefäßkörper, eine Vorrichtung zur Förderung des Substrats und eine Vorrichtung zur Förderung des überkritischen Fluids beinhaltet, wobei die Vorrichtung zur Förderung des Substrats das Substrat in den Gefäßkörper einbringt und die Vorrichtung zur Förderung des überkritischen Fluids, das überkritische Fluid in den Gefäßkörper einbringt, während dieser Gefäßkörper das Substrat und das überkritische Fluid, die dort eingebracht worden sind, aufnimmt, und die Ausbildung einer gleich verteilten Lösung des Substrats und des überkritischen Fluids ermöglicht; und
ein Katalysatorgefäß, das einen Gefäßkörper und eine Vorrichtung für die Abscheidung des Produkts beinhaltet, wobei der Gefäßkörper den Katalysator beinhaltet und die besagte Vorrichtung für die Abscheidung des Produkts dazu dient, das Produkt aus dem Gefäßkörper des Katalysatorgefäßes abzuscheiden; das besagte Katalysatorgefäß und das überkritische Gefäß sind miteinander verbunden, so dass die gleich verteilte Lösung in Kontakt mit dem Katalysator kommen kann und katalytische Reaktionen eingehen kann.

9. Vorrichtung nach Anspruch 8, wobei das überkritische Fluid überkritisches Kohlenstoffdioxid ist.

10. Vorrichtung nach Anspruch 8, wobei die besagte Vorrichtung zur Förderung des überkritischen Fluids weiterhin ein Kontrollventil zur Druckregulation und zur Regulation der Fließrate des überkritischen Fluids umfasst.

11. Vorrichtung nach Anspruch 8, wobei das überkritische Gefäß mit einem Destillationspackungsmaterial befüllt ist.

12. Vorrichtung nach Anspruch 8, die weiterhin eine Vorrichtung zur Temperaturregulation, um die Temperatur in dem überkritischen Gefäß einzustellen, umfasst.

## Revendications

1. Procédé de vieillissement d'un liquide alcoolisé, dans lequel le liquide alcoolisé est estérifié en présence d'un catalyseur d'estérification, **caractérisé en ce que** ledit liquide alcoolisé est estérifié dans du dioxyde de carbone supercritique de manière à réduire le temps requis pour vieillir le liquide alcoolisé.

2. Procédé de la revendication 1, dans lequel on laisse tout d'abord ledit dioxyde de carbone supercritique former un fluide supercritique dans un récipient supercritique sous 69-345 bar (1000-5000 psi) et à 30-100°C, et ensuite ledit dioxyde de carbone supercritique transporte ledit liquide alcoolisé dans un récipient de catalyseur contenant ledit catalyseur d'estérification.

3. Procédé de la revendication 2, dans lequel les pressions dans ledit récipient de catalyseur et ledit récipient supercritique sont identiques, et les températures dans ledit récipient de catalyseur et ledit récipient de fluide supercritique sont également identiques.

4. Procédé de la revendication 2, dans lequel ledit récipient supercritique est rempli d'un garnissage de distillation, et ledit catalyseur d'estérification dans ledit récipient de catalyseur est une lipase.

5. Procédé de la revendication 4, dans lequel ladite pression est de 138 à 276 bar (2000 à 4000 psi), de préférence de 172 à 207 bar (2500 à 3000 psi).

6. Procédé de la revendication 4, dans lequel ladite température est de 40 à 90°C, de préférence de 45 à 65°C.

7. Procédé de la revendication 2, qui est mis en oeuvre selon un procédé du type en continu.

8. Dispositif de vieillissement supercritique, comprenant :
un récipient supercritique comprenant un corps de récipient, un dispositif d'alimentation en matériau, et un dispositif de d'alimentation en fluide supercritique, dans laquelle ledit dispositif d'alimentation en matériau délivre un matériau audit corps de récipient, et ledit dispositif d'alimentation en fluide supercritique délivre un fluide supercritique audit corps de récipient, tandis que ledit corps de récipient retient le matériau et le fluide supercritique qui ont été délivrés à celui-ci, et permet au matériau et au fluide supercritique de former une solution uniformément distribuée ; et
un récipient de catalyseur comprenant un corps de récipient et un dispositif de drainage de produit ; dans laquelle ledit corps de récipient retient un catalyseur dans celui-ci, et ledit dispositif de drainage de produit est destiné à drainer un produit hors dudit corps de récipient dudit récipient de catalyseur ;
ledit récipient de catalyseur et ledit récipient supercritique étant reliés de façon à permettre à ladite solution uniformément distribuée de venir en contact avec ledit catalyseur et de subir des réactions catalytiques.

9. Dispositif de la revendication 8, dans lequel ledit fluide supercritique est du dioxyde de carbone supercritique.

10. Dispositif de la revendication 8, dans lequel ledit dispositif d'alimentation en fluide supercritique comprend en outre une valve de régulation pour contrôler la pression et le débit dudit fluide supercritique.

11. Dispositif de la revendication 8, dans lequel ledit récipient supercritique est en outre rempli d'un garnissage de distillation dans celui-ci.

12. Dispositif de la revendication 8, comprenant en outre un dispositif de régulation de température pour contrôler la température dans ledit récipient supercritique.
